(19) **Europäisches Patentamt**

**European Patent Office**

**Office européen des brevets**

(11) **EP 0 824 058 B1**

(12) **EUROPÄISCHE PATENTSCHRIFT**

(45) Veröffentlichungstag und Bekanntmachung des Hinweises auf die Patenterteilung:
**04.10.2001  Patentblatt 2001/40**

(51) Int Cl.$^7$: **B29C 45/67**

(21) Anmeldenummer: **97250231.4**

(22) Anmeldetag: **06.08.1997**

(54) **Zweiplatten-Spritzgiessmaschine**

Two-plate injection moulding machine

Machine à mouler par injection à deux plateaux

(84) Benannte Vertragsstaaten:
**AT CH DE FR GB IT LI NL**

(30) Priorität: **12.08.1996  US 700675**

(43) Veröffentlichungstag der Anmeldung:
**18.02.1998  Patentblatt 1998/08**

(73) Patentinhaber: **Demag-Ergotech GmbH**
**90571 Schwaig (DE)**

(72) Erfinder:
- **Armbrüster, Manfred**
  **90571 Schwaig (DE)**
- **Betschman, Scott R.**
  **Euclid, Ohio 44123 (US)**
- **Kimpel, Richard**
  **Ohio 44130 (US)**
- **Schmidt, Gerhard**
  **90530 Wendelstein (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**WO-A-89/02357          DE-A- 4 243 735**
**DE-B- 1 136 799          FR-A- 1 570 821**
**GB-A- 1 166 081          GB-A- 2 061 808**
**NL-A- 282 727**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Zweiplatten-Spritzgießmaschine mit einer ortsfesten und einer bewegbaren Formträgerplatte, die über Holme verbunden sind, welche den Schließkraftaufbau und -abbau bewirkende Kolben-Zylinder-Einheiten aufweisen, und an denen zur schnellen Fahrbewegung mindestens ein Fahrzylinder angeordnet ist.

Aus der DE 42 43 735 A1 ist eine derartige Spritzgießmaschine bekannt, wobei bei dieser die Holme als lose Spannbolzen ausgestaltet sind, die die Kolbenstange der Kolben-Zylinder-Einheit bilden. Die Holme sind durch die bewegbare und die ortsfeste Formträgerplatte geführt und es ist eine Hochdruckschließeinheit und eine Schnellverriegelung vorgesehen. Bei dieser Spritzgießmaschine ist die hydraulische Hochdruckschließeinheit innerhalb einer Platte angeordnet, während bei der aus der WO-A-89/2357 bekannten Spritzgießmaschine der Schließzylinder nicht innerhalb sondern hinter einer Platte angeordnet ist.

Aus DE 30 34 024 C2 ist eine Spritzgießmaschine bekannt, bei der in der beweglichen Werkzeugaufspannplatte Säulen zum Anpassen an die Werkzeugeinbauhöhe durch Säulenmuttern in Längsrichtung verstellbar angeordnet sind. Die Säulen weisen an ihren der feststehenden Werkzeugaufspannplatte zugekehrten Enden zum Drehkuppeln geeignete ringabschnittsförmige Außenklauen auf.

In nachteiliger Weise sind bei dieser Spritzgießmaschine Maßnahmen erforderlich, um präzise die Holme gegen Verdrehen zu sichern. Darüber hinaus sind aufgrund der unterbrochenen Kupplungsflächen und deren Neigung große Holmdurchmesser erforderlich, was zu einer unerwünschten Einengung des Werkzeugeinbauraumes führt.

Aus DE 195 05 089 ist ein Verfahren zum Betätigen der Schließeinrichtung einer Zweiplatten-Spritzgießmaschine bekannt, bei dem ein Gleichgangzylinder zum Einsatz kommt, der auf beiden Seiten mit einem gleich großen, hohen Druck beaufschlagt ist, der gleich groß oder größer als derjenige, der zur Ausübung der Nennschließkraft erforderlich ist.

Das aus dieser Schrift bekannte Verfahren ist mit dem Nachteil behaftet, daß die Fahrbewegung der beweglichen Platte immer bei mit hohem Druck vorgespannten Schließzylindern erfolgt. Hierdurch besteht eine große Gefahr der Beschädigung und damit Versagen der Zylinderdichtung. Dies hat Leckagen und hohen Verschleiß an den Dichtungen zur Folge. Weiterhin sind die Stangen der die Schließzylinder bildenden Holme im Arbeitsbereich der Werkzeuge.

Insgesamt ist ein teueres und aufwendiges Konstruktionskonzept verwirklicht. Dies zeigt sich insbesondere durch die für das Verfahren erforderlichen sehr großen Zylinder.

Die Erfindung hat sich das Ziel gesetzt, eine konstruktiv einfache, kostengünstige und umweltverträgliche Zweiplatten-Spritzgießmaschine zu schaffen, die für das Hydrauliksystem eine nur geringe umlaufende Ölmengen erfordert und bei geöffneter Formschließeinheit einen möglichst großen Freiraum zuläßt.

Die Erfindung erreicht dieses Ziel durch die Merkmale des Anspruchs 1. In den weiteren Ansprüchen sind vorteilhafte Weiterbildungen der Erfindung dargelegt.

Erfindungsgemäß wird eine Zweiplatten-Spritzgießmaschine vorgeschlagen, bei dem die Holme als Spannbolzen ausgestaltet sind und die Kolbenstange durch beide Formträgerplatten geführt sind, wobei außerhalb der Formträgerplatten einenends eine Hochdruckschließeinheit und anderenends eine Schnellverriegelung vorgesehen ist. Weiterhin sind Elemente vorgesehen, die direkt oder indirekt die exakte Position der beweglichen Formträgerplatte erfassen.

Für den normalen Öffnen- oder Zufahrvorgang wird ein unabhängig von den Schließzylindern vorgesehener Fahrzylinder eingesetzt. Während dieser Fahrbewegung befinden sich die Schließzylinder, die vorzugsweise als hydraulische Gleichgangzylinder ausgestaltet sind, in Ruhe. Auf diese Weise kann nicht nur Energie gespart werden, es wird auch umweltschonend kein Lärm erzeugt.

Kurz bevor die Formträgerplatten ihre Schließstellung erreichen, wird, überwacht durch ein Wegmeßsystem, die Hydraulik für die Schließeinheit und die Schnellverriegelung betätigt. Die Positionserfassung kann dabei über eine kontinuierliche elektrische Wegmessung oder über einen Anschlag der mit der beweglichen Formträgerplatte verbundenen Kolbenstange bewirkt werden. Soweit ein Anschlag zum Einsatz kommt, kann dieser als Stoßdämpfer eingesetzt werden, der den Auffahrprall der beweglichen Formträgerplatte beim Zufahren dämpft.

Der Kolben des Gleichgangzylinders ist extrem kurz gehalten, da er ausschließlich für den Schließvorgang Verwendung findet. Da der Kolben nur einen minimalen Weg auszuführen hat, ist der Verschleiß der Kolbenstange besonders gering und die Dichtungen sind nur minimalem Verschleiß ausgesetzt.

Die verschiedenen Werkzeughöhen werden durch eine Schnellverriegelung eingestellt, die Sperrelemente aufweist, die in kopfendig an der Kolbenstange vorgesehene Nuten eingreift.

Die Sperrvorrichtung kann aus einer kraftschlüssigen Klemmeinheit bestehen, die an beliebiger Stelle die Kolbenstange fixiert. Diese als Klemmhülse ausgestalte Schnellverriegelung ist dabei unmittelbar mit dem Wegmeßsystem gekoppelt.

Die Schnellverriegelung und die Hochdruckschließeinheit können dabei an der festen oder an der beweglichen Formträgerplatte angeordnet sein. In einer vorteilhaften Ausgestaltung sind die Schnellverriegelung und die Schließeinheit an einem Ende der als Spannbolzen ausgebildeten Holme angeordnet, während am anderen Ende der Holme ein Gewinde vorgesehen ist, auf das eine Stellmutter aufschraubbar ist. Die Schnellverriegelung ist dabei als Kupplung ausgestaltet und erlaubt damit nicht nur ein schnelles Lösen sondern auch ein einfaches Entkuppeln des mit der Stellmutter versehenen Holmteils.

Ein Beispiel der Erfindung ist in der beigefügten Zeichnung dargelegt. Dabei zeigen

Figur 1   Das Schema einer Zweiplattenspritzgießmaschine.
Figur 2   Detail einer Hochdruckschließeinrichtung.
Figur 3   Schema einer Zweiplattenspritzgießmaschine mit einer Kupplungschnellverriegelung.

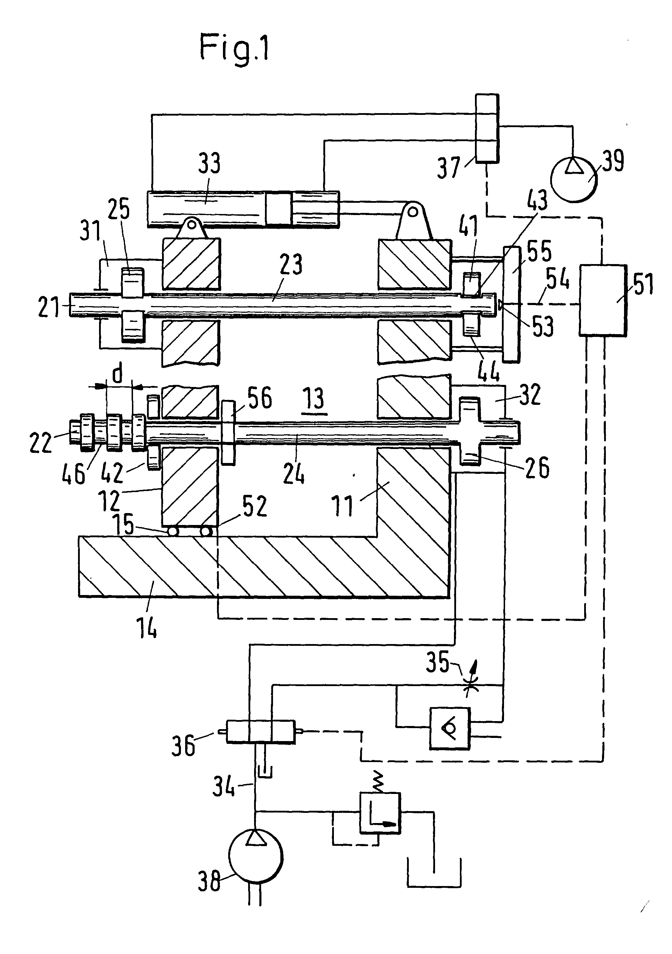

Die Figur 1 zeigt eine Zweiplattenspritzgießmaschine mit einer ortsfesten Formträgerplatte 11 und einer bewegbaren Formträgerplatte 12 zwischen denen sich der Werkzeugraum 13 befindet. Die Formträgerplatte 11 ist unmittelbar mit dem Maschinenbett 14 verbunden.

Die dargestelllte Maschine zeigt Holme 21, 22 mit Kolbenstangen 23, 24, welche kopfendig je eine Hochdruckschließeinheit 31, 32 sowie eine Schnellverriegelung 41, 42 besitzen. In der ersten Kolbenstange 23 ist kopfendig eine Nut 43 vorgesehen, in die Sperrelemente 44 greifen. In der zweiten Kolbenstange 24 sind mehrere Nuten 46 vorgesehen, wobei die Distanz der Nuten in der Kolbenstange mit d bezeichnet ist. In den Hochdruckschließeinrichtungen 31, 32 befinden sich Kolben 25, 26 der Gleichgangzylinder.

Für die schnelle Fahrbewegung ist die bewegbare Formträgerplatte 12 über einen Fahrzylinder 33 mit der ortsfesten Trägerplatte 11 verbunden. Die bewegbare Formträgerplatte 12 ist über Lager 15 auf dem Maschinenbett 14 bewegbar gelagert.

Die Hochdruckschließeinrichtung 31, 32 ist über ein Schaltventil 36 und der Fahrzylinder 33 über ein Schaltventil 37 mit Hydraulikpumpen 38, 39 verbunden. Im Hydraulikkreis 34 der Hochdruckschließeinrichtung 31, 32 ist eine Drossel 35 vorgesehen. Weiterhin weist das Hydrauliksystem nicht weiter positionierte Elemente wie Rückschlagventil und Druckbegrenzungsventil auf.

An der bewegbaren Formträgerplatte 12 ist ein direktes Wegmeßelement 52 vorgesehen, das ebenso wie ein indirektes Meßelement 53, das an einer für die erste Kolbenstange 23 vorgesehenen Anschlagplatte 55 angeordnet ist, mit einer Meß- und Regeleinrichtung 51 in Verbindung steht.

Weiterhin ist an der zweiten Kolbenstange ein Anschlagring 56 angeordnet.

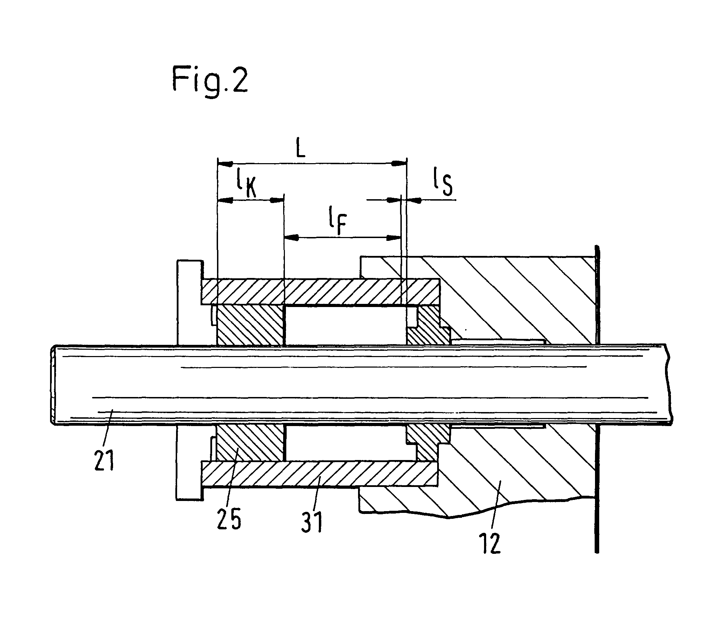

Die Figur 2 zeigt im Detail eine als Gleichgangzylinder ausgebildete Hochdruckschließeinrichtung 31, mit einem durch die bewegbare Formträgerplatte 12 geführten Holm 21, an dem der Kolben 25 befestigt ist. Die Kolbendicke ist mit $l_K$ gekennzeichnet. Neben dem Weg zum Aufbringen der Kraft beim Schließen der Formträgerplatten $l_F$ ist der erforderliche Weg (Toleranz) der Schließeinrichtung $l_S$ dargestellt. Dieser Weg $l_S$ ist erforderlich, damit die Schnellverriegelung 41 in die Nut 43 am anderen Kopfende des Holms 21 ungehindert tätigbar ist.

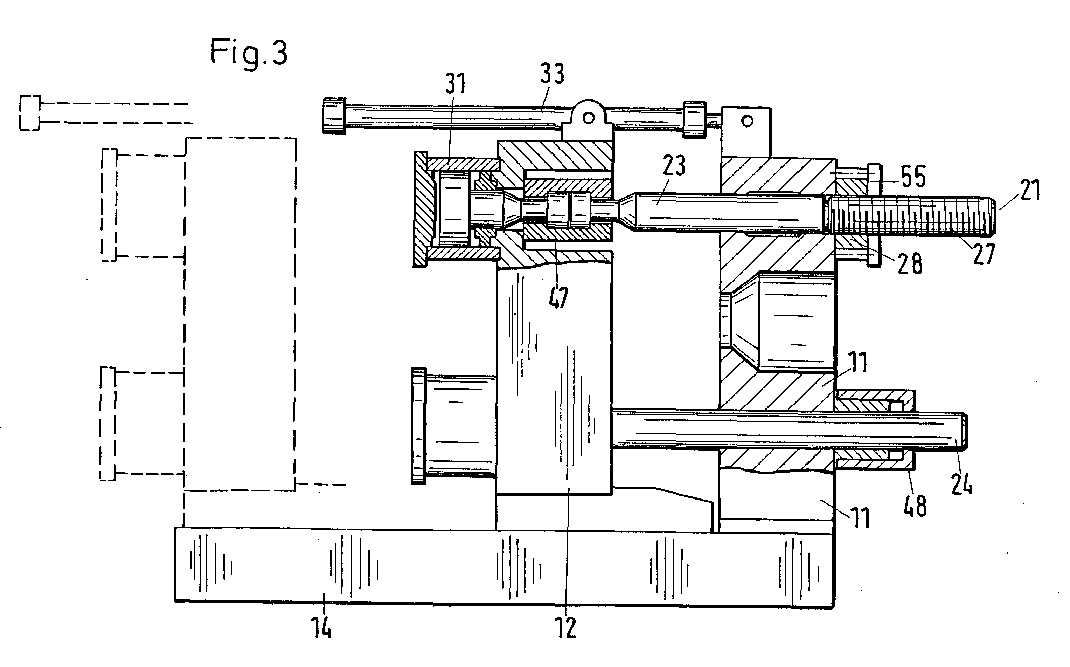

In der Figur 3 ist ergänzend zu den Positionen der Figur 1 die Schnellverriegelung in Form einer Kupplung 47 dargestellt. Die Kolbenstange 23 besitzt an einem Ende ein Gewinde 27, auf das zur Einstellung der Werkzeughöhe eine Mutter 28 geschraubt ist.

Weiterhin ist ergänzend zu Figur 1 die zweite Kolbenstange 24 durch eine Klemmhülse 48 schnell verriegelbar.

Die Figur 3 zeigt darüber hinaus die Schließstellungen "offen" (gestrichelt) und "geschlossen".

Positionsliste

Spritzgießmaschine

11   Ortsfeste Formträgerplatte
12   Bewegbare Formträgerplatte
13   Werkzeugraum
14   Maschinenbett
15   Lager

Holmeneinrichtung

21   Erster Holm
22   Zweiter Holm
23   Erste Kolbenstange
24   Zweite Kolbenstange
25   Erste Kolben-Zylinder-Einheit
26   Zweite Kolben-Zylinder-Einheit
27   Gewinde
28   Mutter

Hydraulikanlage

31   Erste Hochdruckschließeinrichtung
32   Zweite Hochdruckschließeinrichtung
33   Fahrzylinder
34   Hydraulikkreis
35   Drossel
36   Schaltventil 31, 32
37   Schaltventil 33
38, 39   Pumpen

Verriegelungseinrichtung

| 41 | Erste Schnellverriegelung |
| 42 | Zweite Schnellverriegelung |
| 43 | Nut |
| 44 | Sperrelemente |
| 46 | Nuten |
| 47 | Kupplungsschnellverriegelung |
| 48 | Klemmhülse |

| d | Distanz der Nuten in den Kolben |
| L | Länge des Zylinders |
| $l_F$ | Weg zum Aufbringen der Kraft beim Schließen der Formträgerplatten |
| $l_S$ | Erforderlicher Weg (Toleranz) der Schließeinrichtung |
| $l_K$ | Dicke des Kolbens |

Meß- und Regeleinrichtung

| 51 | Meß- und Regeleinrichtung |
| 52 | Meßelement direkt |
| 53 | Meßelement indirekt |
| 54 | Meßleitung |
| 55 | Anschlagplatte |
| 56 | Anschlagring |

## Patentansprüche

1. Zweiplatten-Spritzgießmaschine mit einer ortsfesten und einer bewegbaren Formträgerplatte, die über Holme verbunden sind, welche den Schließkraftaufbau und -abbau bewirkende Kolben-Zylinder-Einheiten aufweisen, und an denen zur schnellen Fahrbewegung mindestens ein Fahrzylinder angeordnet ist,

   wobei die Holme (21, 22) als lose Spannbolzen ausgestaltet sind, die die Kolbenstange (23, 24) der Kolben-Zylinder-Einheit (25, 26) bilden, durch die bewegbare (12) und die ortsfeste Formträgerplatte (11) geführt sind, außerhalb der Formträgerplatten (11, 12) eine hydraulische Hochdruckschließeinheit und eine Schnellverriegelung (41, 42) aufweisen, die an der vom Werkzeugraum (13) wegweisenden Seite der dem Schließzylinder (31, 32) gegenüberliegenden Formträgerplatte (11, 12) angeordnet ist, und die aus einer kopfendig an der Kolbenstange (23) der Kolben-Zylinder-Einheit (31) angeordneten Nut (43, 46) gebildet wird, die mit klauenartigen Sperrelementen (46) korrespondiert, und

   wobei Elemente (52, 53) vorgesehen sind, die die Lage der beweglichen Formträgerplatte (12) definiert erfassen und die Schnellverriegelung (41, 42) sowie die Schließeinheit (31, 32) sowie den Fahrzylinder (33) steuern.

2. Zweiplatten-Spritzgießmaschine nach Anspruch 1, **dadurch gekennzeichnet, dass** mehrere Nuten (43) in der Kolbenstange (24) vorgesehen sind, die in einer Distanz (d) voneinander beabstandet sind, die der geplanten Stufung der Formbreite des Werkzeugs entspricht.

3. Zweiplatten-Spritzgießmaschine nach Anspruch 1, **dadurch gekennzeichnet, daß** jede Kolben-Zylinder-Einheit (31, 32) als Gleichgangzylinder ausgebildet ist, dessen Zylinder eine Länge (L) aufweist, der der Formel

$$L = 1 \text{ bis } 1{,}2 \times (l_F + l_S + l_K)$$

   entspricht mit

   $l_F$ = Weg zum Aufbringen der Kraft beim Schließen der Formträgerplatten
   $l_S$ = erforderlicher Weg (Toleranz) der Schließeinrichtung
   $l_K$ = Dicke des Kolbens.

4. Zweiplatten-Spritzgießmaschine nach Anspruch 1, **dadurch gekennzeichnet, dass** Anschläge (55, 56) ausgebildet sind, gegen die das schnellverriegelungsseitige Ende der Kolbenstange (23, 24) beim Zusammenfahren der Formplatten (11, 12) anstößt.

5. Zweiplatten-Spritzgießmaschine nach den Ansprüchen 4 oder 1, **dadurch gekennzeichnet, dass** im Hydraulikkreis (34) der Schließeinheit (31, 32) eine Drossel (35) vorgesehen ist, die beim Anschlag der Kolbenstange (23, 24) gegen den Anschlag (55, 56) eine Dämpfung des Stoßes bewirkt.

## Claims

1. Two-plate injection moulding machine having a fixed and a moving die carrier plate connected via braces, which have piston-cylinder units that build up and diminish the closing force, and to which for rapid travel motion at least one travel cylinder is provided, wherein the braces (21, 22) take the form of loose tension bolts, which form the piston rods (23, 24) of the piston-cylinder unit (25, 26), whereby the moving (12) and the fixed die carrier plate (11) are guided, apart from die carrier plates (11, 12) have a hydraulic highpressure closing unit and a quick lock (41, 42), which is disposed on the side of the die carrier plate (11, 12) opposite the closing cylinder (31, 32) and facing away from the tool chamber (13), and which is formed of a groove (43, 46) disposed on the end of the piston rod (23) of the piston-cylinder unit (31) and corresponding to claw-type locking elements (46), and wherein elements (52, 53) are provided which detect in a specified manner the position of the moving die carrier plate (12) and control the quick lock (41, 42) and the closing unit (31, 32) and the travel cylinder (33).

2.  Two-plate injection moulding machine according to claim 1, **characterised in that** a plurality of grooves (43) are provided in the piston rod (24), which are spaced apart by a distance (d) corresponding to the planned stepping of the die width of the tool.

3.  Two-plate injection moulding machine according to claim 1, **characterised in that** each piston-cylinder unit (31, 32) is formed as a synchronous cylinder, whose cylinder has a length (L), corresponding to the formula

$$L = 1 \text{ to } 1.2 \times (I_F + I_S + I_K),$$

where

I$_F$ = distance for application of the force during closure of the die carrier plate
I$_S$ = necessary distance (tolerance) of the closing device
I$_K$ = thickness of the piston.

4.  Two-plate injection moulding machine according to claim 1, **characterised in that** stops (55, 56) are formed, against which the end of the piston rod (23, 24) on the quick lock side impacts when the die plates (11, 12) are being moved together.

5.  Two-plate injection moulding machine according to claims 4 or 1, **characterised in that** in the hydraulic circuit (34) of the closing unit (31, 32) a choke is provided, which damps the impact when the piston rod (23, 24) hits the stop (55, 56).

**Revendications**

1.  Machine de coulée par injection à deux plaques, comportant une plaque de support de moule fixe et une plaque de support de moule mobile, qui sont reliées par l'intermédiaire de longerons, lesquels présentent des vérins permettant d'établir et de supprimer la force de fermeture, et sur lesquels il est agencé au moins un vérin de translation pour un mouvement de translation rapide, les longerons (21, 22) étant réalisés comme boulons de tension lâches qui forment la tige de piston (23, 24) du vérin (25, 26), sont guidés à travers la plaque de support de moule mobile (12) et la plaque de support de moule fixe (11), présentent, à l'extérieur des plaques de support de moule (11, 12), une unité de fermeture hydraulique à haute pression et un verrouillage rapide (41, 42), qui est agencé sur le côté, opposé à l'espace d'outil (13), de la plaque de support de moule (11, 12) opposée au vérin de fermeture (31, 32), et qui est formé par une gorge (43, 46) agencée à l'extrémité de tête sur la tige de piston (23) du vérin (31), qui correspond avec des éléments d'arrêt (46) du type griffe, et des éléments (52, 53) étant prévus qui détectent, de façon définie, la position de la plaque de support de moule mobile (12) et commandent le verrouillage rapide (41, 42) ainsi que l'unité de fermeture (31, 32) et le vérin de translation (33).

2.  Machine de coulée par injection à deux plaques selon la revendication 1, **caractérisée en ce que** plusieurs gorges (43) sont prévues dans la tige de piston (24), qui sont écartées l'une de l'autre d'une distance (d) qui correspond à la graduation envisagée de la largeur de format de l'outil.

3.  Machine de coulée par injection à deux plaques selon la revendication 1, **caractérisée en ce que** chaque vérin (31, 32) est réalisé comme vérin d'allure uniforme, dont le cylindre présente une longueur (L), qui correspond à la formule :

$$L = 1 \text{ à } 1{,}2 \times (I_F + I_S + I_K)$$

avec :

I$_F$ = course pour appliquer la force lors de la fermeture des plaques de support de moule
I$_S$ = course nécessaire (tolérance) du dispositif de fermeture
I$_K$ = épaisseur du piston.

4.  Machine de coulée par injection à deux plaques selon la revendication 1, **caractérisée en ce que** des butées (55, 56) sont réalisées, contre lesquelles s'appuie l'extrémité, du côté du verrouillage rapide, de la tige de piston (23, 24) lorsque les plaques de moule (11, 12) se rencontrent.

5.  Machine de coulée par injection à deux plaques selon les revendications 4 ou 1,
**caractérisée en ce que**, dans le circuit hydraulique (34) de l'unité de fermeture (31, 32), il est prévu un étranglement (35) qui, lors de la butée de la tige de piston (23, 24) contre la butée (55, 56), permet d'amortir le choc.

# Fig.1

Fig.2

Fig.3